# FASCICULE DE BREVET EUROPEEN

(11) **EP 0 671 438 B1**
(45) Date de publication et mention de la délivrance du brevet: **19.01.2000**
(21) Numéro de dépôt: 95400419.8
(22) Date de dépôt: 27.02.1995
(51) Int. Cl.: C08L 95/00

(54) **Procédé d'obtention d'un liant bitumineux, liant bitumineux et application du liant obtenu**
Verfahren zum Erhalten eines bituminosen Bindemittels, Bitumenbindemittel und dessen Verwendung
Process for producing a bituminous binder, this binder and its applications

(30) Priorité: 28.02.1994 FR 9402277
(43) Date de publication de la demande: 13.09.1995
(73) Titulaire: COLAS S.A., F-92653 Boulogne-Billancourt Cédex (FR)
(72) Inventeur: Chappat, Michel, F-78310 Maurepas (FR); Godet, Alain, F-92310 Sevres (FR)
(74) Mandataire: Michelet, Alain

(56) Documents cités:
- EP-A- 0 343 027
- FR-A- 2 360 630
- FR-A- 2 620 457
- US-A- 3 242 114

## Description

La présente invention a pour objet un procédé d'obtention d'un liant bitumineux destiné à être appliqué comme enduit superficiel à hautes performances sur une chaussée, un liant bitumineux obtenu et l'application du liant bitumineux obtenu sur des chaussées à trafic intense.

Les liants bitumineux traditionnels utilisés pour la réalisation d'enduit superficiel ont des caractéristiques qui ne permettent pas de les utiliser sur des chaussées dont le trafic est supérieur ou égal à 15.000 véhicules par jour.

FR-2.360.630 décrit un procédé pour améliorer les produits bitumineux et notamment leur plasticité. Selon ce procédé on introduit dans le bitume un mélange de copolymères styrène-butadiène. Les copolymères sont incorporés sous la forme d'un mélange renfermant des copolymères à structure linéaire et des copolymères à structure non linéaire ou réticulée.

FR-2.620.457 décrit un procédé de préparation d'un liant bitumineux selon lequel on incorpore dans le bitume un mélange de copolymères styrène-butadiène. Ce mélange de copolymères fait au préalable l'objet de la préparation d'une dispersion ou solution-mère du mélange de copolymères dans un milieu solvant ou dispersant comprenant un mélange de coupes pétrolières. Ce liant bitumineux présente une souplesse améliorée et une moindre fragilité aux basses températures.

EP-A-0.343.027, qui bénéficie de la priorité de FR-2.630.451, décrit un procédé d'obtention de bitumes renfermant au moins un élastomère et permettant d'utiliser un bitume pur en très forte proportion. Ce procédé comprend deux étapes:

Dans la première étape, on prépare une dispersion homogène constituée d'élastomère et de bitume sélectionné à faible pourcentage en produits saturés et en asphaltènes en malaxant l'élastomère et le bitume jusqu'à l'obtention d'une solution mère à forte concentration en élastomère. Dans la deuxième étape, on dilue ladite solution-mère avec un bitume routier jusqu'à obtention d'un bitume élastomère.

Ce procédé connu permet de supprimer le risque de démixion du liant, ce qui facilite donc le stockage du liant.

Cependant, le produit obtenu ne contient aucun produit volatil et ses caractéristiques rhéologiques ne permettent pas de l'utiliser tel quel en emploi par répandage.

Toutefois, pour résister à un trafic important, comme indiqué ci-dessus, le liant bitumineux de l'enduit superficiel doit posséder une très forte cohésivité pour ne pas subir de rupture dans le film du liant sous l'action des efforts tangentiels dus à la circulation.

D'un autre côté, le liant bitumineux doit présenter une très forte adhésivité, d'une part, pour maintenir le granulat et, d'autre part, pour adhérer sur le support.

Le but de l'invention est d'améliorer les liants bitumineux renfermant au moins un élastomère afin d'obtenir des liants bitumineux capables de résister à un trafic important.

L'invention doit permettre la réalisation et l'utilisation d'un liant bitumineux qui associe un élastomère lui conférant une bonne élasticité et un bitume routier qui constitue la matrice du liant et dont le coût est relativement faible.

De même, l'invention doit permettre d'obtenir un tel liant qui ait une bonne cohésion et soit stable, c'est la raison pour laquelle le procédé de l'invention vise à assurer ou à améliorer la compatibilité de l'élastomère et du bitume routier.

La présente invention propose un procédé d'obtention d'un liant modifié bitumineux répondant aux deux caractéristiques essentielles indiquées ci-dessus pour la bonne tenue d'un enduit.

De façon générale, le procédé de la présente invention comprend quatre étapes.

Dans une première étape, on fabrique une solution-mère à base d'élastomère et de bitume sélectionné à faible pourcentage en produits saturés et en asphaltènes, ou à base d'élastomère et d'une huile pétrolière aromatique ou naphténique ou paraffinique ayant un point initial de distillation d'au moins 300°C.

Dans une deuxième étape, on dilue la solution-mère avec une huile pétrolière lourde ou un plastifiant.

Dans une troisième étape, on réalise un mélange avec du bitume routier.

Dans une quatrième étape, on effectue le fluxage du mélange avec un diluant ou un fluxant pétrolier ou un bitume fluidifié ou un fluxant carbochimique ou un mélange de ces produits.

Le liant bitumineux selon la présente invention contient au moins deux constituants en plus du bitume et du polymère à savoir : - une huile pétrolière lourde ou un plastifiant ou un fluxant d'une part ; - un diluant ou un fluxant d'autre part, dont l'action a pour effet d'abaisser la viscosité pour en permettre l'emploi en tant que liant de répandage.

L'huile pétrolière lourde ou le plastifiant a une action pérenne tandis que l'autre ou les autres (les diluants ou les fluxants) sont de plus ou moins grande volatilité et destinés à disparaître en totalité ou partiellement après la mise en oeuvre. Les fractions restantes après évaporation des fractions volatiles contribuent à conserver au liant sa plasticité.

La présente invention a donc pour objet un procédé d'obtention d'un liant bitumineux destiné à être appliqué comme enduit superficiel sur une chaussée à fort trafic, comprenant les étapes consistant à:
a) préparer une solution-mère à base d'élastomère et d'un produit pétrolier choisi parmi un bitume sélectionné renfermant moins de 6% de produits saturés et moins de 7% d'asphaltènes et ayant un indice d'instabilité colloïdale inférieur à 0,17, une huile pétrolière lourde ayant une viscosité à 100°C comprise entre 10 et 150 mm²/s, un point éclair supérieur à 150°C et un point initial de distillation supérieur à 300°C, et un mélange d'un tel bitume sélectionné et d'une telle huile pétrolière lourde;
b) ajouter à la solution-mère un agent de dilution choisi parmi les huiles pétrolières lourdes et les plastifiants non volatils dodécylbenzène, dioctylphtalate, benzylbutylphtalate et diisoheptylphtalate et leurs mélanges pour abaisser, si nécessaire, la viscosité;
c) mélanger le produit obtenu avec un bitume routier ayant une pénétrabilité à 25°C supérieure à 15 mm/10;
d) effectuer le fluxage du mélange avec un diluant choisi parmi du pétrole lampant, du white spirit et un bitume fluidifié par une coupe pétrolière ou avec un mélange au moins partiellement volatil de ces produits en quantité nécessaire pour obtenir la viscosité désirée pour le répandage.

La présente invention concerne également les caractéristiques ci-après, prises isolément ou selon toutes leurs combinaisons techniquement possibles:
- les étapes b) et c) sont inversées;
- les étapes c) et d) sont inversées;
- les étapes a) et b) sont réalisées simultanément;
- les étapes c) et d) sont réalisées simultanément;
- les étapes b) et c) sont réalisées simultanément;
- les différentes étapes du procédé sont mises en oeuvre à une température dans la gamme de 80 à 200°C, de préférence 120 à 180°C;
- l'élastomère est du styrène-butadiène-styrène (SBS);
- l'élastomère est sélectionné pour des propriétés lors de la mise en oeuvre (il est thermofusible) et pour les propriétés qu'il confère au liant résiduel (cohésivité, souplesse à froid.....), c'est par exemple du styrène-butadiène-styrène (SBS). Le liant obtenu a avantageusement une teneur en élastomère comprise entre 1 et 7% en masse. Ce peut être un polymère ou un mélange de polymères;
- l'huile pétrolière lourde est une huile pétrolière aromatique ou naphténique ou paraffinique;
- le bitume routier de l'étape c) a une pénétrabilité à 25°C de préférence comprise entre 50 et 150 mm/10;
- dans l'étape a), le rapport en poids « élastomère/bitume sélectionné » varie de 5/95 à 20/80 de préférence, de 10/90 à 15/85;
- dans l'étape a), le rapport en poids « élastomère/huile pétrolière » est compris entre 10/90 et 50/50, de préférence entre 25/75 et 35/65;
- dans l'étape b), le rapport en poids « huile ou plastifiant/solution mère » est compris entre 5/95 et 60/40, de préférence 10/90 à 50/50;
- dans l'étape c), le rapport en poids "mélange obtenu à l'issue de l'étape b)/bitume routier" est compris entre 5/95 et 55/45 parties, de préférence entre 10/90 et 30/70 ;
- la viscosité à 100°C des huiles pétrolières est comprise dans la gamme de 10 à 150 mm²/s, de préférence de 50 à 100 mm²/s ;
- le liant stabilisé selon le projet de norme française Pr T 66-037 a une cohésivité au mouton-pendule supérieure à 1 J/cm², un allongement à la rupture selon le projet de norme Pr T 66-038 NF d'au moins 400% à - 10°C et 10 mm/min et d'au moins 1000% à + 20°C et 500 mm/min et un retour élastique supérieur à 40% à 10°C selon le projet de norme Pr T 66-040.
- le liant est appliqué pour réaliser des chaussées à fort trafic (au moins du niveau T1).

L'invention est illustrée par les exemples non limitatifs ci-après où les % mentionnés sont des parties en poids.

### EXEMPLE 1

On prépare une solution-mère en mélangeant 15% de styrène-butadiène-styrène en poudre ou en granulés à température ambiante avec 85% de bitume sélectionné porté à 180°C.

Le bitume sélectionné, de grade 180/220 ou 80/100, renferme moins de 6% de produits saturés et moins de 7% d'asphaltènes, il a un indice d'instabilité colloïdale inférieur à 0,17.

On dilue la solution-mère à raison de 70% avec 30% d'huile pétrolière.

L'huile pétrolière est une huile pétrolière aromatique ou naphténique ou paraffinique ou un mélange des trois. Elle a une viscosité à 100°C comprise entre 50 et 100 mm²/s, son point éclair selon la norme NF T 60 118 est supérieur à 150°C et son point initial de distillation est supérieur à 300°C. Elle est utilisée à une température de l'ordre de 100°C.

On mélange alors 15% du produit obtenu avec 85% de bitume routier de grade 80/100 et on effectue le fluxage du mélange avec du pétrole lampant (NF M 15 003 ou NF M 15 004) en quantité nécessaire pour obtenir une pseudo-viscosité comprise entre 40 et 600 s à 40°C avec l'orifice de 4 mm (NF T 66 005).

### EXEMPLE 2

On prépare une solution-mère en mélangeant 30 % de styrène-butadiène-styrène avec 70% d'huile pétrolière aromatique ou naphténique ou paraffinique de l'exemple 1.

On dilue la solution-mère à raison de 50% avec 50% de dodécylbenzène, ou de dioctylphtalate ou de benzylbutyl- phtalate, ou de diisoheptylphtalate.

On mélange alors 10% du produit obtenu avec 90% de bitume routier de grade 60/70 et on effectue le fluxage du mélange avec du white spirit (norme NF M 15-006 ou NF M 15-014) en quantité nécessaire pour obtenir une pseudo-viscosité comprise entre 40 et 600 s à 40°C avec l'orifice de 4 mm (NF T 66-005).

### EXEMPLE 3

On prépare une solution-mère en mélangeant 20% de styrène-butadiène-styrène avec 80% d'un mélange d'huile pétrolière ayant un point initial de distillation d'au moins 300°C et de bitume sélectionné comme indiqué à l'exemple 1.

Les conditions de température sont de 100°C pour l'huile pétrolière et de 150°C pour le bitume sélectionné.

On dilue la solution-mère à raison de 50% avec 50% de dodécylbenzène ou de dioctylphtalate ou de benzylbutylphtalate ou de diisoheptylphtalate. On mélange 15% du produit obtenu avec 85% de bitume routier et on effectue le fluxage avec du bitume fluidifié 0/1 (NF T 65 002 NF) en utilisant les quantités nécessaires de chaque ingrédient pour obtenir une pseudo-viscosité comprise entre 40 et 600 s à 40°C avec l'orifice de 4 mm (NF T 66 005).

### EXEMPLE 4

On prépare une solution-mère en mélangeant 30% de styrène-butadiène-styrène avec 70% d'un mélange d'huiles pétrolières ayant un point initial de distillation d'au moins 300°C.

On mélange 5% du produit obtenu avec 95% de bitume routier. On dilue le produit ci-dessus à raison de 95% avec 5% de dodécylbenzène, ou de benzylbutylphtalate, ou de diisoheptylphtalate.

On effectue le fluxage du mélange avec du white spirit (NF M 15 006 ou NF M 15 014) en quantité nécessaire pour obtenir une pseudo-viscosité comprise entre 40 et 600 s à 40°C avec l'orifice de 4 mm.

Le liant obtenu dans les exemples 1 à 4 a son maximum de cohésivité au mouton-pendule, selon le projet de norme française Pr T 66-037, de l'ordre de 1,3 à 1,5 J/cm². Après stabilisation, selon le projet de norme française Pr T 66-031, le liant a une cohésivité de l'ordre de 1,2 à 1,4 J/cm².

### EXEMPLE 5

On prépare une solution-mère en mélangeant un 15% de styrène-butadiène-styrène avec 85% de bitume sélectionné comme indiqué à l'exemple 1, porté à 180°C.

On dilue la solution-mère à raison 70% avec 30% d'huile pétrolière ayant un point initial de distillation d'au moins 300°C. On mélange alors 30% du produit obtenu avec 70% de bitume routier et on effectue le fluxage avec du bitume fluidifié 0/1 (NF T 65 002) ou du white spirit (NF M 15 006 ou NF M 15 014) ou du pétrole lampant (NF M 15 003 ou NF M 15 004) en utilisant les quantités nécessaires de chaque ingrédient pour obtenir une pseudo-viscosité comprise entre 40 et 600 s à 40°C avec l'orifice de 4 mm (NF T 66 005).

On obtient un liant dont le maximum de cohésivité au mouton-pendule atteint une valeur de l'ordre de 1,9 J/cm² (liant neuf) et de 1,8 J/cm² (liant stabilisé). Ce liant est appliqué pour réaliser des enduits superficiels, en particulier sur les routes à fort trafic.

Le liant modifié obtenu selon le procédé de la présente invention est utilisé pour réaliser des enduits superficiels.

Le projet de norme française Pr T 66-037 définit les conditions d'une mesure de cohésion au mouton-pendule à une température donnée.

Selon ce projet de norme la cohésion est définie comme étant l'énergie par l'unité de surface absorbée par la rupture d'un film de liant soumis à un choc déterminé.

Pour la mesurer, un cube en acier est collé par un film de liant de 1 mm d'épaisseur sur un support également en acier.

Le cube possède deux cales d'épaisseur de 1 mm permettant de constituer une plaque de liant de 1 mm d'épaisseur sur un cm² de section.

Le choc d'un mouton-pendule sur le cube provoque la cassure du film de liant.

Un cadran gradué muni d'une aiguille freinée permet de mesurer l'angle de remontée maximum du mouton-pendule et de calculer l'énergie absorbée correspondante.

Cet essai est effectué en deux temps:
1° - le cube étant collé à son support par le liant
2° - le cube n'étant pas collé au support.

La cohésion est égale à la différence entre l'énergie nécessaire pour chasser le tube collé par le liant et l'énergie nécessaire pour chasser le cube seul, divisée par la surface de rupture.

Des précisions complémentaires à cette définition sont données par le projet de norme lui-même auquel on pourra se référer.

Le projet de norme française Pr T 66-038 a pour objet la détermination des caractéristiques à la traction des liants bitumineux et en particulier des bitumes modifiés par des polymères.

L'essai à la traction est réalisé soit sur le liant bitumineux, soit sur le liant bitumineux stabilisé.

Une éprouvette de liant de forme haltère prise par ses extrémités entre deux mors est étirée dans une enceinte régulée à la température choisie à une vitesse constante jusqu'à la rupture ou étirement de 400% minimum.

On a appelé - bitume routier - un bitume pur tel que défini par la norme expérimentale française T 65-001 du mois de septembre 1979.

Plus précisément, les bitumes font l'objet de la norme NF T 65000, les bitumes fluidifiés de la norme NF T 76002 et les bitumes fluxés de la norme NF T 65003.

L'invention n'est pas limitée par les modes de réalisation représentés et décrits en détails et diverses modifications peuvent y être apportées sans sortir de son cadre.

## Revendications

1. Procédé d'obtention d'un liant bitumineux destiné à être appliqué comme enduit superficiel sur une chaussée à fort trafic, comprenant les étapes suivantes consistant à:
a) préparer une solution-mère à base d'élastomère et d'un produit pétrolier choisi parmi un bitume sélectionné renfermant moins de 6% de produits saturés et moins de 7% d'asphaltènes et ayant un indice d'instabilité colloïdale inférieur à 0,17, une huile pétrolière lourde ayant une viscosité à 100C comprise entre 10 et 150 mm²/s, un point éclair (norme NF T 60 118) supérieur à 150°C et un point initial de distillation supérieur à 300°C, et un mélange d'un tel bitume sélectionné et d'une telle huile pétrolière lourde;
b) ajouter à la solution-mère un agent de dilution choisi parmi les huiles pétrolières lourdes définies ci-dessus, le dodécylbenzène, le dioctylphtalate, le benzylbutylphtalate et le diisoheptylphtalate et leurs mélanges;
c) mélanger le produit obtenu avec un bitume pur tel que défini par la norme expérimentale française T65-001 du mois de Septembre 1979 et ayant une pénétrabilité à 25°C supérieure à 15 mm/10;
d) effectuer le fluxage du mélange avec un agent de dilution choisi parmi du pétrole lampant (norme NF M 15003 ou NF M 15004), du white spirit (norme NF M 15006 ou NF M 15014) et un bitume fluidifié par une coupe pétrolière (norme française T 65002) ou avec un mélange au moins partiellement volatil de ces produits en quantité nécessaire pour obtenir la viscosité désirée pour le répandage.

2. Procédé selon la revendication 1 dans lequel les étapes b) et c) sont inversées.

3. Procédé selon la revendication 1, dans lequel les étapes c) et d) sont inversées.

4. Procédé selon l'une quelconque des revendications 1 à 3 dans lequel les étapes a) et b) sont réalisées simultanément.

5. Procédé selon l'une des revendications 1 à 4 dans lequel les étapes c) et d) sont réalisées simultanément.

6. Procédé selon l'une des revendications 1 à 4 dans lequel les étapes b) et c) sont réalisées simultanément.

7. Procédé selon l'une des revendications 1 à 6, caractérisé en ce que les différentes étapes sont mises en oeuvre à des températures dans la gamme de 80 à 200°C, de préférence de 120 à 180°C.

8. Procédé selon l'une quelconque des revendications 1 à 7, caractérisé en ce que le polymère est de préférence un élastomère du type styrène-butadiène-styrène (SBS).

9. Procédé selon l'une quelconque des revendications 1 à 8, caractérisé en ce que le bitume pur a une pénétrabilité à 25°C comprise entre 50 et 150 mm/10.

10. Procédé selon l'un quelconque des revendications 1 à 9, caractérisé en ce que, dans l'étape a), le rapport en poids « élastomère/bitume sélectionné» est compris entre 5/95 et 20/80, de préférence entre 1/90 et 15/85.

11. Procédé selon l'une quelconque des revendications 1 à 10, caractérisé en ce que, dans l'étape a), le rapport en poids « élastomère/huile pétrolière » est compris entre 10/90 et 50/50, de préférence entre 25/75 et 35/65.

12. Procédé selon l'une quelconque des revendications 1 à 11, caractérisé en ce que, dans l'étape b), le rapport en poids « huile ou plastifiant/solution-mère » est compris entre 5/95 et 60/40, de préférence entre 10/90 et 50/50.

13. Procédé selon l'une quelconque des revendications 1 à 12, caractérisé en ce que, dans l'étape c), le rapport en poids « mélange obtenu à l'issue de l'étape b)/bitume routier » est compris entre 5/95 et 55/45, de préférence entre 10/90 et 20/80.

14. Liant bitumineux pour enduit superficiel de chaussée obtenu selon le procédé de l'une quelconque des revendications 1 à 13, caractérisé en ce que le liant stabilisé selon le projet de norme française Pr T 66-031 a une cohésivité au mouton-pendule selon le projet de norme Pr T 66-036 supérieur à 1 J/cm², un allongement à la rupture selon le projet de norme française Pr T 66-038 d'au moins 400% à -10°C et 10 mm/min et d'au moins 1000% à 20°C et 500 mm/min et un retour élastique selon le projet de norme française Pr T 666040 supérieur à 40% à 10°C.

15. Application du liant bitumineux obtenu selon le procédé de l'une quelconque des revendications 1 à 13 pour réaliser des enduits superficiels sur des chaussées à fort trafic (au moins du niveau T1).

## Patentansprüche

1. Verfahren zum Erhalten eines bituminösen Bindemittels, das dazu bestimmt ist, als Oberflächenüberzug auf einer stark befahrenen Fahrbahn zu dienen, umfassend folgende Schritte, die darin bestehen,
a) eine Mutterlösung auf der Grundlage eines Elastomer und eines Erdölerzeugnisses zuzubereiten, welches aus einem ausgesuchten Bitumen, welches weniger als 6 % gesättigte Produkte und weniger als 7 % Asphaltene einschließt und einen kolloidalen Instabilitätsindex unter 0,17 hat, einem schweren Erdöl, welches eine Viskosität bei 100°C zwischen einschließlich 10 und 150 mm²/s , einen Flammpunkt (Norm NF T 60 118) über 150°C und einen Destillationsanfangspunkt über 300°C hat, sowie einer Mischung eines solchen ausgesuchten Bitumens und eines solchen schweren Erdöls ausgewählt ist;
b) der Mutterlösung ein Lösungsmittel hinzuzufügen, welches aus schweren Erdölen, wie sie oben definiert sind, dem Dodecylbenzol, dem Dioctylphtalat, dem Benzylbutylphtalat und dem Diisoheptylphtalat sowie deren Mischungen ausgewählt ist;
c) das erhaltene Erzeugnis mit einem reinen Bitumen zu mischen, wie es durch die französische Versuchsnorm T65-001 vom Monat September 1979 definiert ist und das eine Durchlässigkeit bei 25°C über 15mm/10 aufweist;
d) eine Flußmittelbehandlung der Mischung mit einem Verdünnungsmittel durchzuführen, welches aus Petroleum (Norm NF M 15003 oder NF M 15004), Leichtbenzin (Norm NF M 15006 oder NF M 15014) und einem durch eine Erdölfraktion (französische Norm T 65002) fluidisiertem Bitumen ausgewählt ist oder mit einer wenigstens teilweise flüchtigen Mischung dieser Produkte in der notwendigen Menge, um die gewünschte Viskosität zum Ausbreiten zu erhalten.

2. Verfahren nach Anspruch 1, bei dem die Schritte b) und c) umgekehrt sind.

3. Verfahren nach Anspruch 1, bei dem die Schritte c) und d) umgekehrt sind.

4. Verfahren nach einem der Ansprüche 1 bis 3,
bei dem die Schritte a) und b) gleichzeitig durchgeführt werden.

5. Verfahren nach einem der Ansprüche 1 bis 4,
bei dem die Schritte c) und d) gleichzeitig durchgeführt werden.

6. Verfahren nach einem der Ansprüche 1 bis 4,
bei dem die Schritte b) und c) gleichzeitig durchgeführt werden.

7. Verfahren nach einem der Ansprüche 1 bis 6,
**dadurch gekennzeichnet,**
daß die verschiedenen Schritte bei Temperaturen in dem Bereich von 80 bis 200°C, vorzugsweise 120 bis 180°C ausgeführt werden.

8. Verfahren nach einem der Ansprüche 1 bis 7,
**dadurch gekennzeichnet,**
daß das Polymer vorzugsweise ein Elastomer des Typs Styrol/Butadien/Styrol (SBS) ist.

9. Verfahren nach einem der Ansprüche 1 bis 8,
**dadurch gekennzeichnet,**
daß das reine Bitumen eine Durchlässigkeit bei 25°C zwischen einschließlich 50 und 150 mm/10 hat.

10. Verfahren nach einem der Ansprüche 1 bis 9,
**dadurch gekennzeichnet,**
daß bei Schritt a) das Gewichtsverhältnis "Elastomer/ausgesuchtem Bitumen" zwischen einschließlich 5/95 und 20/80, vorzugsweise 1/90 und 15/85 liegt.

11. Verfahren nach einem der Ansprüche 1 bis 10,
**dadurch gekennzeichnet,**
daß bei Schritt a) das Gewichtsverhältnis "Elastomer/Erdöl" zwischen einschließlich 10/90 und 50/50, vorzugsweise 25/75 und 35/65 liegt.

12. Verfahren nach einem der Ansprüche 1 bis 11,
**dadurch gekennzeichnet,**
daß bei Schritt b) das Gewichtsverhältnis "Öl oder Lösungsmittel/Mutterlösung" zwischen einschließlich 5/95 und 60/40, vorzugsweise zwischen 10/90 und 50/50 liegt.

13. Verfahren nach einem der Ansprüche 1 bis 12,
**dadurch gekennzeichnet,**
daß bei Schritt c) das Gewichtsverhältnis "Mischung erhalten nach Abschluß von Schritt b)/Straßenbitumen" zwischen einschließlich 5/95 und 55/45, vorzugsweise zwischen 10/90 und 20/80 liegt.

14. Bitumenbindemittel für Fahrbahnoberflächenüberzug, erhalten nach dem Verfahren gemäß einem der Ansprüche 1 bis 13,
**dadurch gekennzeichnet,**
daß das nach dem Entwurf der französischen Norm Pr T 66-031 stabilisierte Bindemittel eine Pendelschlagwerkfestigkeit gemäß dem Entwurf der französischen Norm Pr T 66-036 über 1 J/cm², eine Bruchdehnung nach dem Entwurf der französischen Norm Pr T 66-038 von wenigstens 400 % bei -10°C und 10 mm/min und wenigstens 1000 % bei 20°C und 500 mm/min und eine elastische Rückkehr nach dem Entwurf der französischen Norm Pr T 666040 über 40 % bei 10°C hat.

15. Verwendung des Bitumenbindemittels, welches nach einem Verfahren gemäß einem der Ansprüche 1 bis 13 erhalten wird, zur Herstellung von Oberflächenüberzügen auf stark befahrenen Fahrbahnen (wenigstens in Höhe T1).

## Claims

1. Process for producing a bituminous binder intended to be applied as a surface coating to a road with high traffic density, comprising the following steps consisting of:
a) preparing a mother solution of an elastomer and a petroleum product selected from a selected bitumen containing less than 6% of saturated products and less than 7% of asphaltenes and having a colloidal instability index of less than 0.17, a heavy petroleum oil having a viscosity at 100°C of between 10 and 150 mm²/s, a flash point (standard NF T 60 118) higher than 150°C and an initial distillation point higher than 300°C, and a mixture of said selected bitumen and said heavy petroleum oil;
b) adding to the mother solution a dilution agent selected from the heavy petroleum oils defined above, dodecylbenzene, dioctylphthalate, benzylbutylphthalate and diisoheptylphthalate and their mixtures;
c) mixing the product obtained with a pure bitumen as defined by the French experimental standard T65-001 of September 1979 and having a penetrability at 25°C greater than 15 mm/10;
d) fluxing the mixture with a dilution agent selected from kerosene (standard NF M 15003 or NF M 15004), white spirit (standard NF M 15006 or NF M 15014) and a bitumen fluidified by a petroleum fraction (French standard T 65002) or with an at least partially volatile mixture of these products in an amount necessary for obtaining the desired viscosity for spreading.

2. Process according to claim 1, wherein steps b) and c) are reversed.

3. Process according to claim 1, wherein steps c) and d) are reversed.

4. Process according to any one of claims 1 to 3, wherein steps a) and b) are performed simultaneously.

5. Process according to one of claims 1 to 4, wherein steps c) and d) are performed simultaneously.

6. Process according to one of claims 1 to 4, wherein steps b) and c) are performed simultaneously.

7. Process according to one of claims 1 to 6, characterized in that the different steps are performed at temperatures in the range from 80 to 200°C, preferably from 120 to 180°C.

8. Process according to any one of claims 1 to 7, characterized in that the polymer is preferably an elastomer of the styrene-butadiene-styrene (SBS) type.

9. Process according to any one of claims 1 to 8, characterized in that the pure bitumen has a penetrability at 25°C of between 50 and 150 mm/10.

10. Process according to any one of claims 1 to 9, characterized in that, in step a), the ratio by weight "elastomer/selected bitumen" is between 5/95 and 20/80, preferably between 1/90 and 15/85.

11. Process according to any one of claims 1 to 10, characterized in that, in step a), the ratio by weight "elastomer/petroleum oil" is between 10/90 and 50/50, preferably between 25/75 and 35/65.

12. Process according to any one of claims 1 to 11, characterized in that, in step b), the ratio by weight "oil or plasticizer/mother solution" is between 5/95 and 60/40, preferably between 10/90 and 50/50.

13. Process according to any one of claims 1 to 12, characterized in that, in step c), the ratio by weight "mixture obtained after step b)/road bitumen" is between 5/95 and 55/45, preferably between 10/90 and 20/80.

14. Bituminous binder for a road surface coating obtained according to the process of any one of claims 1 to 13, characterized in that the binder stabilized according to the draft French standard Pr T 66-031 has a cohesiveness in a pendulum ram impact test according to draft standard Pr T 66-036 greater than 1 J/cm², a breaking elongation according to draft French standard Pr T 66-038 of at least 400% at -10°C and 10 mm/min and at least 1000% at 20°C and 500 mm/min and a resilience according to draft French standard Pr T 666040 greater than 40% at 10°C.

15. Application of the bituminous binder obtained according to the process of any one of claims 1 to 13 for applying surface coatings to roads with a high traffic density (at least level T1).
